# EUROPÄISCHE PATENTSCHRIFT

(11) **EP 0 771 699 B1**
(45) Veröffentlichungstag und Bekanntmachung des Hinweises auf die Patenterteilung: **26.01.2000**
(21) Anmeldenummer: 96116575.0
(22) Anmeldetag: 16.10.1996
(51) Int. Cl.: B60R 21/22

(54) **Gassack-Seitenaufprall-Schutzeinrichtung für Fahrzeuginsassen**
Side-impact airbag protection device for vehicle occupants
Dispositif de protection contre les chocs latéraux à coussin gonflable, pour occupants de véhicules

(30) Priorität: 02.11.1995 DE 29517373 U
(43) Veröffentlichungstag der Anmeldung: 07.05.1997
(73) Patentinhaber: TRW Occupant Restraint Systems GmbH & Co. KG, 73551 Alfdorf (DE)
(72) Erfinder: Eyrainer, Heinz, 73550 Waldstetten (DE)
(74) Vertreter: Degwert, Hartmut, Dipl.-Phys.

(56) Entgegenhaltungen:
- DE-U- 29 605 897
- GB-A- 2 293 355
- PATENT ABSTRACTS OF JAPAN vol. 017, no. 316 (M-1430), 16.Juni 1993 & JP 05 032149 A (TOYOTA MOTOR CORP), 9.Februar 1993,
- PATENT ABSTRACTS OF JAPAN vol. 095, no. 008, 29.September 1995 & JP 07 125603 A (TOYOTA MOTOR CORP), 16.Mai 1995,

## Beschreibung

Die Erfindung betrifft eine Gassack-Seitenaufprall-Schutzeinrichtung für Fahrzeuginsassen, die in eine Fahrzeugtür integriert ist und eine Druckgasquelle sowie einen durch diese aufblasbaren Kopfschutz-Gassack aufweist, der sich beim Aufblasen in einem Raum seitlich der Fahrzeugtüre entfaltet.

Eine solche Schutzeinrichtung dient dazu, im Falle eines Seitenaufpralls des Fahrzeugs einen Kontakt des Kopfes eines Fahrzeuginsassen mit Teilen des Fahrzeugs wie der B-Säule oder der Innenseite der Tür sowie mit durch die Seitenscheibe eindringenden beweglichen Objekten, beispielsweise anderen Fahrzeugen, oder feststehenden Objekten zu verhindern, beispielsweise Pfosten oder Pfählen. Ein Problem bei solchen Schutzeinrichtungen ist, daß der Kopfschutz-Gassack genau und sicher positioniert werden muß, so daß dieser auch bei einem nicht genau mittigen Aufprall des Kopfes des Fahrzeuginsassen nicht aus seiner einen Schutz gewährenden Stellung verschoben wird. Ein weiteres Problem stellt der sich üblicherweise von der B-Säule zum Oberkörper des Fahrzeuginsassen erstreckende Sicherheitsgurt dar, der das Entfalten des Kopfschutz-Gassackes beeinträchtigen kann.

Durch die Erfindung wird eine Gassack-Seitenaufprall-Schutzeinrichtung geschaffen, bei der der Kopfschutz-Gassack mit der Fahrzeugtür außer durch den Umfangsabschnitt einer Einblasöffnung auch durch ein Befestigungsteil verbunden ist, welches in der Fahrzeuglängsrichtung gesehen von der Einblasöffnung beabstandet ist. Durch diese Gestaltung wird zum einen eine besonders gute Stabilisierung des Kopfschutz-Gassackes im aufgeblasenen Zustand erzielt, und zum anderen kann mittels dieser Gestalt ein Entfaltungsvorgang erhalten werden, bei dem es zu keiner Behinderung durch den Sicherheitsgurt kommt.

Weitere vorteilhafte Merkmale der Erfindung sind in den Unteransprüchen angeführt.

Die Erfindung wird nachfolgend unter Bezugnahme auf die beigefügte Zeichnung beschrieben. In dieser zeigen:
- Figur 1: eine schematische Darstellung einer Ausführungsform einer erfindungsgemäßen Schutzeinrichtung im Ruhezustand;
- Figur 2: eine schematische Darstellung der Schutzeinrichtung von Figur 1 mit entfaltetem Kopfschutz-Gassack;
- Figur 3: einen Querschnitt durch die erfindungsgemäße Schutzeinrichtung, in dem der Kopfschutz-Gassack sowohl im Ruhezustand als auch im entfalteten Zustand dargestellt ist;
- Figur 4: eine Darstellung der durch den Kopfschutz-Gassack und die Druckgasquelle gebildeten Baugruppe; und
- Figur 5: eine Darstellung des Entfaltungsvorganges des Kopfschutz-Gassackes.

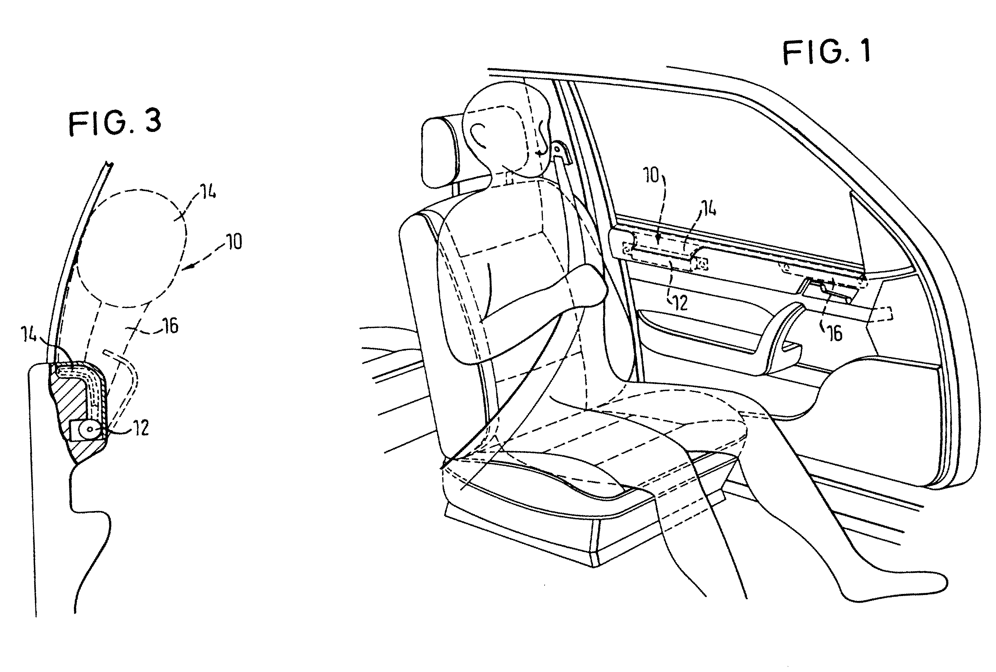

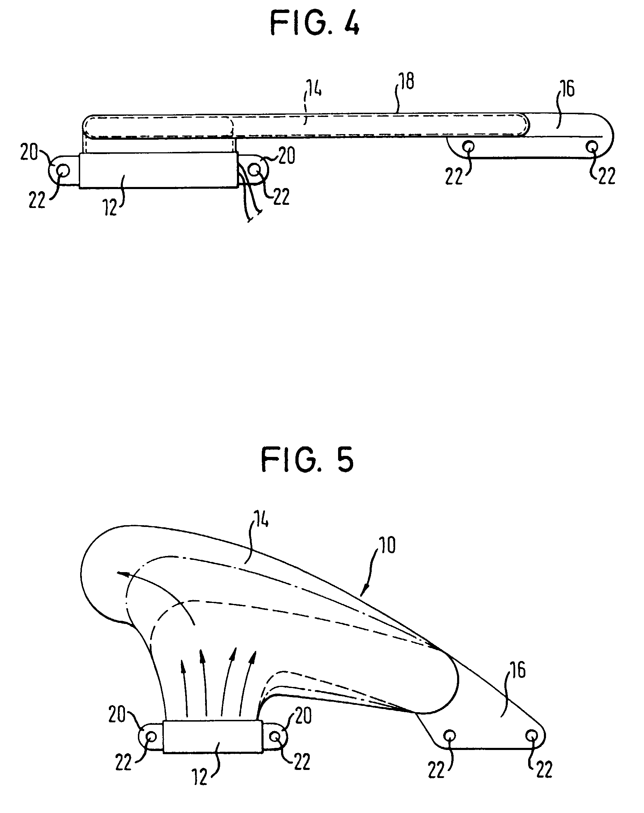

In Figur 1 ist schematisch eine erfindungsgemäße Gassack-Seitenaufprall-Schutzeinrichtung 10 dargestellt, die in eine Fahrzeugtür integriert ist. Die Schutzeinrichtung besteht im wesentlichen aus einer schematisch dargestellten Druckgasquelle 12 sowie einem Kopfschutz-Gassack 14. Die Druckgasquelle 12 ist mit der schematisch dargestellten Fahrzeugtür verbunden und weist eine (nicht dargestellte) Ausströmöffnung auf. Der Kopfschutz-Gassack 14 weist eine (nicht dargestellte) Einblasöffnung auf, deren Umfangsabschnitt mit der Ausströmöffnung der Druckgasquelle 12 verbunden ist. In der in dieser Figur dargestellten Ruhestellung ist der Kopfschutz-Gassack 14 in eine allgemein langgestreckte Form zusammengefaltet, so daß er oberhalb der Druckgasquelle 12 entlang dem oberen Rand der Verkleidung der Fahrzeugtür, jedoch hinter dieser, angeordnet ist (siehe auch Figur 3). Am bezüglich der Fahrzeugtür vorderen axialen Ende des zusammengefalteten Kopfschutz-Gassackes 14 ist ein Befestigungsteil 16 angebracht, welches als einteilig mit dem Kopfschutz-Gassack 14 ausgebildeter, abgenähter Gewebelappen ausgeführt ist. Dieser Gewebelappen 16 ist mit der Tür im vorderen Bereich des unteren Fensterrahmens fest verbunden.

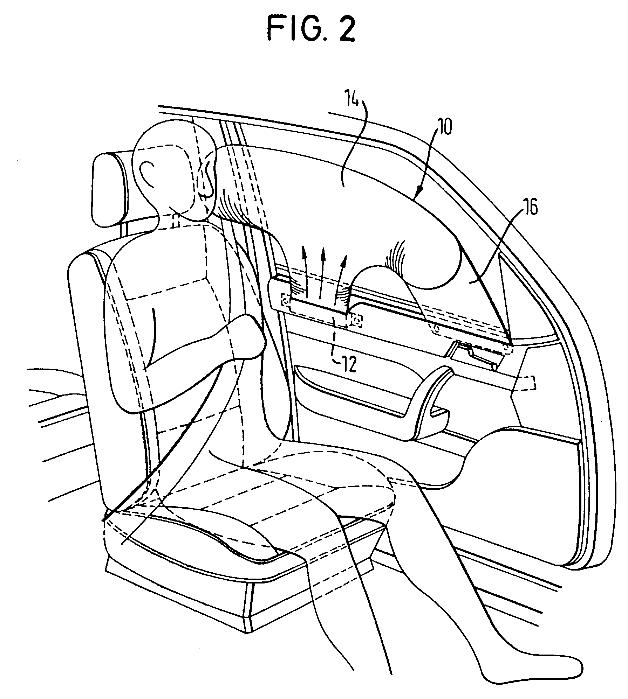

Im Bedarfsfall wird die Druckgasquelle 12 mittels einer (nicht dargestellten) Auslösesensorik gezündet, woraufhin von der Druckgasquelle 12 eine vorbestimmte Menge von unter Druck stehendem Gas erzeugt wird, welches in den Kopfschutz-Gassack 14 einströmt. Dieser beginnt, sich zu entfalten, wobei die Verkleidung von der Fahrzeugtür derart gelöst wird, daß der Kopfschutz-Gassack 14 aus der Verkleidung austreten kann (siehe die Figuren 2 und 3). Für die Befestigung der Verkleidung an der Fahrzeugtür kann im Bereich der Fahrzeugscheibe eine leicht lösbare Verbindung wie eine Klipsverbindung verwendet werden. In Figur 2 ist zu sehen, daß der Kopfschutz-Gassack 14 im vollständig entfalteten Zustand eine allgemein zylindrische Gestalt aufweist und mit der Fahrzeugtür zum einen über den Umfangsabschnitt der Einströmöffnung und die Druckgasquelle 12 und zum anderen über den Gewebelappen 16 verbunden ist. Der Gewebelappen 16 befindet sich an einem axialen Ende des Kopfschutz-Gassackes 14, während sich das andere axiale Ende des Kopfschutz-Gassackes jenseits des hinteren Randes der Fahrzeugtür im Bereich der B-Säule befindet.

In Figur 4 ist schematisch die aus der Druckgasquelle 12 sowie dem Kopfschutz-Gassack 14 gebildete Baugruppe dargestellt. Der zusammengefaltete Gassack ist in eine Thermofolie 18 eingeschweißt, so daß er seine zusammengefaltete Form während des Transports und der Montage beibehält. In dieser Figur sind Befestigungslaschen 20 der Druckgasquelle 12 sowie Befestigungslöcher 22 des Gewebelappens 16 zu sehen, mittels denen die Baugruppe mit der Fahrzeugtür bzw. mit deren Verkleidung verbunden werden kann. Die dargestellte Baugruppe kann in der Verkleidung der Fahrzeugtür vormontiert werden, bevor die Verkleidung in die Fahrzeugtür eingebaut wird.

In Figur 5 ist der Entfaltungsvorgang des Kopfschutz-Gassackes 14 dargestellt. Durch eine geeignete Faltung des Gassackes wird erreicht, daß sich das zu dem Gewebelappen 16 entgegengesetzte axiale Ende des Kopfschutz-Gassackes erst gegen Ende des Entfaltungsvorganges nach hinten zu B-Säule hin entfaltet. Dadurch wird verhindert, daß der sich zwischen der B-Säule und dem Oberkörper eines Fahrzeuginsassen erstreckende Sicherheitsgurt das Entfalten des Kopfschutz-Gassackes 14 beeinträchtigt. Zur Erzielung eines solchen Entfaltungsverhaltens kann das entsprechende Ende des Gassackes beim Falten nach innen eingestülpt sein. Eine ähnliche Wirkung läßt sich auch durch (nicht dargestellte) Aufreißnähte erzielen, die beim Entfalten in kontrollierter Weise aufreißen und so das gewünschte Entfaltungsverhalten gewährleisten.

Durch die beschriebene Ausgestaltung der erfindungsgemäßen Schutzeinrichtung werden die folgenden Vorteile erzielt: Durch die Verwendung eines von der Einblasöffnung des Kopfschutz-Gassackes 14 getrennten Befestigungsteils 16 wird ein Entfaltungsvorgang des Gassacks erzielt, der von einem zwischen der B-Säule und dem Oberkörper eines Fahrzeuginsassen verlaufenden Sicherheitsgurt nicht beeinträchtigt wird. Ferner ist der Kopfschutz-Gassack 14 aufgrund der zusätzlichen Verbindung mit der Fahrzeugtür, nämlich mittels des Gewebelappens 16, im entfalteten Zustand besonders stabil, so daß auch ein exzentrisches Auftreffen des Kopfes eines Fahrzeuginsassen auf den Kopfschutz-Gassack nicht zu einer unerwünschten Lageänderung des Kopfschutz-Gassackes 14 führt. Durch die Anordnung des zusammengefalteten Kopfschutz-Gassackes 14 entlang dem oberen Rand der Verkleidung der Fahrzeugtür und aufgrund des Austretens des sich entfaltenden Gassackes durch einen Spalt zwischen dem oberen Rand der Verkleidung und der Tür ist eine Sollbruchstelle in der Türverkleidung nicht notwendig, durch die üblicherweise ein in der Fahrzeugtür angebrachter Gassack austritt. Durch die allgemein langgestreckte Form des Gassackes und durch das Befestigungsteil 14 wird ein definiertes Ablösen der Verkleidung der Fahrzeugtür von dieser und ein definiertes Austreten des Kopfschutz-Gassackes 14 aus der Verkleidung gewährleistet. Da die Druckgasquelle 12 unterhalb des Fensters der Fahrzeugtür angeordnet ist, ergibt sich im Vergleich mit Schutzeinrichtungen, welche Gasgeneratoren beispielsweise im Dachbereich des Fahrzeugs oder in der Kopfstütze des Fahrzeugsitzes verwenden, eine insgesamt geringere Geräuschbelastung für den Fahrzeuginsassen im Falle der Zündung der Druckgasquelle. Durch den abgenähten Gewebelappen 16 und die allgemein zylindrische Gestalt des Kopfschutz-Gassackes 14 weist dieser ein vergleichsweise geringes Volumen auf, was sich günstig auf die notwendige Größe der Druckgasquelle 12 sowie auf die erforderliche Aufblaszeit auswirkt. Schließlich ergibt sich im Hinblick auf ein Auftreffen des sich entfaltenden Kopfschutz-Gassackes auf Körperteile des Fahrzeuginsassen bei dem sich gemäß der Erfindung von unten nach oben entfaltenden Kopfschutz-Gassack ein wesentlich besseres Ergebnis als bei Kopfschutz-Gassäcken, die sich beispielsweise aus der Kopfstütze des Fahrzeuges heraus entfalten.

Gemäß einer nicht dargestellten Variante einer erfindungsgemäßen Gassack-Seitenaufprall-Schutzeinrichtung ist vorgesehen, daß die Einblasöffnung des Gassacks 14 relativ zum Fahrzeug vor dem Gewebelappen 16 angeordnet ist; die Anordnung der Einblasöffnung und des Gewebelappens ist also umgekehrt wie bei der in den Figuren dargestellten Ausführungsform.

## Patentansprüche

1. Gassack-Seitenaufprall-Schutzeinrichtung für Fahrzeuginsassen, die in eine Fahrzeugtür integriert ist und eine Druckgasquelle (12) sowie einen durch diese aufblasbaren Kopfschutz-Gassack (14) aufweist, der sich beim Aufblasen in einem Raum seitlich der Fahrzeugtüre entfaltet, dadurch gekennzeichnet, daß der Kopfschutz-Gassack (14) mit der Fahrzeugtür außer durch den Umfangsabschnitt einer Einblasöffnung auch durch ein Befestigungsteil (16) verbunden ist, welches in der Fahrzeuglängsrichtung gesehen von der Einblasöffnung beabstandet ist.

2. Gassack-Seitenaufprall-Schutzeinrichtung nach Anspruch 1, dadurch gekennzeichnet, daß die Einblasöffnung in der Fahrtrichtung der Fahrzeugs gesehen vor dem Befestigungsteil liegt.

3. Gassack-Seitenaufprall-Schutzeinrichtung nach Anspruch 1, dadurch gekennzeichnet, daß die Einblasöffnung in der Fahrtrichtung des Fahrzeugs gesehen hinter dem Befestigungsteil liegt.

4. Gassack-Seitenaufprall-Schutzeinrichtung nach einem der vorhergehenden Ansprüche, dadurch gekennzeichnet, daß das Befestigungsteil ein Gewebelappen (16) ist.

5. Gassack-Seitenaufprall-Schutzeinrichtung nach Anspruch 4, dadurch gekennzeichnet, daß der Gewebelappen (16) einteilig mit dem Kopfschutz-Gassack (14) ausgebildet ist.

6. Gassack-Seitenaufprall-Schutzeinrichtung nach einem der vorhergehenden Ansprüche, dadurch gekennzeichnet, daß der Kopfschutz-Gassack (14) im entfalteten Zustand eine allgemein zylindrische Form hat.

7. Gassack-Seitenaufprall-Schutzeinrichtung nach Anspruch 2 und Anspruch 6, dadurch gekennzeichnet, daß das Befestigungsteil (16) an einem axialen Ende des Kopfschutz-Gassackes (14) angeordnet ist und sich das andere axiale Ende jenseits des hinteren Randes der Fahrzeugtür befindet.

8. Gassack-Seitenaufprall-Schutzeinrichtung nach einem der vorhergehenden Ansprüche, dadurch gekennzeichnet, daß der Kopfschutz-Gassack (14) im zusammengefalteten Zustand eine langgestreckte Form aufweist und entlang dem oberen Rand der Verkleidung der Fahrzeugtür angeordnet ist.

9. Gassack-Seitenaufprall-Schutzeinrichtung nach einem der vorhergehenden Ansprüche, dadurch gekennzeichnet, daß der Kopfschutz-Gassack (14) durch Aufreißnähte unterteilt ist, die beim Aufblasen des Kopfschutz-Gassackes (14) zur Erzielung eines kontrollierten Entfaltens aufreißen.

## Claims

1. A gas bag lateral impact protective device for vehicle occupants, which is integrated in a vehicle door and comprises a compressed gas source (12) and a head protecting gas bag (14) to be inflated by the compressed gas source and which deploys on inflation in a space to the side of the vehicle door, characterized in that the head protecting gas bag (14) is connected with the vehicle door not only by the peripheral portion of an inflation opening but furthermore by an attachment part (16), which, as viewed in the longitudinal direction of the vehicle, is spaced from the inflation opening.

2. The gas bag lateral impact protective device as claimed in claim 1, characterized in that the inflation opening, as viewed in the direction of travel of the vehicle, is arranged in front of the attachment part.

3. The gas bag lateral impact protective device as claimed in claim 1, characterized in that the inflation opening, as viewed in the direction of travel of the vehicle, is arranged behind the attachment part.

4. The gas bag lateral impact protective device as claimed in any one of the preceding claims, characterized in that the attachment part is a flap (16) of fabric.

5. The gas bag lateral impact protective device as claimed in claim 4, characterized in that the fabric flap (16) is integral with the head protecting gas bag (14).

6. The gas bag lateral impact protective device as claimed in any one of the preceding claims, characterized in that the head protecting gas bag (14) possesses a generally cylindrical shape in the deployed state thereof.

7. The gas bag lateral impact protective device as claimed in claim 2 and in claim 6, characterized in that the attachment part (16) is arranged at an axial end of the head protecting gas bag (14) and the other axial end is located beyond the rear edge of the vehicle door.

8. The gas bag lateral impact protective device as claimed in any one of the preceding claims, characterized in that in the folded state thereof the head protecting gas bag (14) possesses an elongated shape and is arranged along the upper edge of the cladding of the vehicle door.

9. The gas bag lateral impact protective device as claimed in any one of the preceding claims, characterized in that the head protecting gas bag (14) is divided by rip-open seams, which on inflation of the head protecting gas bag (14) tear in order to provide for controlled deployment.

## Revendications

1. Dispositif de protection à coussin gonflable contre les chocs latéraux pour les passagers d'un véhicule, qui est intégré dans une portière de véhicule et présente une source de gaz comprimé (12) et un coussin gonflable (14) de protection de la tête, qui peut être gonflé par cette source, et qui se déplie lors du gonflement du coussin dans un espace qui se trouve sur le côté des portes du véhicule, caractérisé en ce que le coussin gonflable (14) de protection de la tête est relié à la porte du véhicule à l'extérieur par la section périphérique d'un orifice de gonflage même à travers une pièce de fixation (16), qui, vue dans le sens longitudinal du véhicule, est à une certaine distance de l'orifice de gonflage.

2. Dispositif de protection à coussin gonflable contre les chocs latéraux selon la revendication 1, caractérisé en ce que l'orifice de gonflage se trouve, vu dans le sens de la marche du véhicule, devant la pièce de fixation.

3. Dispositif de protection à coussin gonflable contre les chocs latéraux selon la revendication 1, caractérisé en ce que l'orifice de gonflage, vu dans le sens de la marche du véhicule, se trouve derrière la pièce de fixation.

4. Dispositif de protection à coussin gonflable contre les chocs latéraux selon l'une des revendications précédentes, caractérisé en ce que la pièce de fixation est un morceau de tissu (16).

5. Dispositif de protection à coussin gonflable contre les chocs latéraux selon la revendication 4, caractérisé en ce que le morceau de tissu (16) est constitué d'une seule pièce avec le coussin gonflable (14) de protection de la tête.

6. Dispositif de protection à coussin gonflable contre les chocs latéraux selon l'une des revendications précédentes, caractérisé en ce que le coussin gonflable (14) de protection de la tête a une forme générale cylindrique quand il est déplié.

7. Dispositif de protection à coussin gonflable contre les chocs latéraux selon les revendications 2 et 6, caractérisé en ce que la pièce de fixation (16) est disposée sur une extrémité axiale du coussin gonflable (14) de protection de la tête et en ce que l'autre extrémité axiale se trouve du côté du bord arrière de la porte du véhicule.

8. Dispositif de protection à coussin gonflable contre les chocs latéraux selon l'une des revendications précédentes, caractérisé en ce que le coussin gonflable (14) de protection de la tête présente, quand il est replié, une forme allongée et est disposé le long du bord supérieur de l'habillage de la porte du véhicule.

9. Dispositif de protection à coussin gonflable contre les chocs latéraux selon l'une des revendications précédentes, caractérisé en ce que le coussin gonflable (14) de protection de la tête est subdivisé par des coutures de déchirure, qui se déchirent lors du gonflage du coussin gonflable (14) de protection de la tête pour obtenir un dépliage contrôlé.
